# EUROPEAN PATENT SPECIFICATION

(11) **EP 2 681 110 B1**
(45) Date of publication and mention of the grant of the patent: **08.07.2015**
(21) Application number: 12712909.6
(22) Date of filing: 05.03.2012
(51) Int. Cl.: C02F 1/02, B63J 4/00

(54) **SYSTEM FOR TREATING BALLAST WATER IN BALLAST TANKS**
BALLASTWASSERBEHANDLUNGSSYSTEM IN BALLASTTANKS
SYSTÈME DE TRAITEMENT D'EAU DE BALLAST DANS CUVES DE BALLAST

(30) Priority: 03.03.2011 DK 201170108 P; 27.01.2012 WO PCT/DK2012/050038
(43) Date of publication of application: 08.01.2014
(73) Proprietor: Bawat A/S, 3500 Værløse (DK)
(72) Inventor: HUMMER, Jan Stumpe, DK-2930 Klampenborg (DK)
(74) Representative: Zacco Denmark A/S
(86) International application number: PCT/DK2012/050068
(87) International publication number: WO 2012/116704

(56) References cited:
- FR-A1- 2 826 931
- US-A- 3 745 960
- US-A1- 2003 205 136
- US-A1- 2006 027 507

## Description

The present Invention relates to a system for treating ballast water in ballast tanks onboard vessels and offshore constructions, said system comprising: one or more ballast tanks, a circulation pump capable of circulating or recirculating, via tubing, ballast water from and to the one or more ballast tanks; a gas supply unit connected to the tubing to the effect that gas, such as atmospheric air and/or inert gas, such as nitrogen and carbon dioxide, can be supplied to the ballast water; and one or more nozzle heads that are functionally connected to the tubing and is/are arranged in one or more ballast tanks, said one or more nozzle heads comprising at least one nozzle for injection of the gas-containing water into the one or more ballast tanks; a device configured for removing and/or killing live organisms present in the ballast water.

According to a further aspect of the invention, the method relates to the treatment of ballast water in ballast tanks as set forth in claims 13 - 16.

### Background

To uphold the stability of a ship independently of it carrying cargo or not, ships are provided with tanks that can be filled or emptied depending on the nature of the cargo. Such tanks are designated ballast tanks, and the water charged into them is designated ballast water.

When an empty ship or a ship partially carrying cargo leaves a port, ballast water has therefore been charged into the ballast tanks to uphold the stability and to adjust the buoyancy of the ship.

Almost always, such ballast water will contain live organisms. When the ships arrive at their destination, and when the ships are once again to take on a cargo, the ballast water is let out again. This discharge of ballast water may thus potentially introduce invasive species to the marine environment in the destination port, which means that the live organisms are moved from their natural habitat to a new biosphere. Those live organisms that are indigenous to another part of the world may be a threat to the local marine life and are therefore designated "biological pollution". Every year, major tank vessels move billions of cubic meters of water with live organisms from one part of the world to another, and the tank vessels are thereby contributing factors in the introduction of hundreds of invasive marine species to new environments which is considered to be once of the world's largest environmental issues.

The document. US 2006/0027507 is considered as the closest state of the art, and discloses an ozone-based ship ballast water treatment system.

Some of the live organisms that are entrained with the ballast water into the ballast tanks along with pumped-in mud and other impurities deposit on the interior faces of the ballast tank and sediment at the bottom, and not all of such organisms are flushed out with the ballast water when the ballast tanks are emptied of ballast water. Consequently, there is likewise a need for regularly performing a cleaning of, in particular, the bottom of the ballast tank when it is not replete with ballast water.

Now, specific requirements have been drawn up by the international Maritime Organization (IMO) in respect of how few live organisms are allowed in the pumped-out ballast water, and the present invention aims at ensuring that those requirements are complied with.

In addition to said issues, there are also problems in respect of corrosion of the ballast tanks. The majority of the ships in the world's fleet are made of steel, including the ballast tanks of those ships, and when those tanks are exposed to oxygen, salt, as well as water from the ballast water, the ballast tanks will be subject to corrosion. Therefore comprehensive preventive measures are made to avoid both corrosion of the steel and extensive repairs of areas afflicted by corrosion.

Worldwide, there are moreover many costs involved in the preventive work and necessary repairs of corroded areas, and consequently many attempts are made, too, at solving that problem in various ways, ia by treating the surfaces with paint and by anodic protection.

It is known to keep ballast tanks free from microorganisms and to avoid corrosion by reducing the concentration of oxygen by supplying nitrogen gas to the ballast water and hence make the environment in the ballast tank poor in oxygen and hence minimise the presence of microorganisms and aerobic bacteria while simultaneously avoiding corrosion of the ballast tanks.

US 20030205138 discloses a system and a method of treating ballast water while simultaneously preventing corrosion. A nitrogen source produces nitrogen gas which may be pumped directly or via a venturi injector into the ballast water. Water is pumped through the injector to the effect that the water comes into contact with the nitrogen gas. The injector will generate a lot of small bubbles in the nitrogen-containing water, and the oxygen in the ballast water will be dissolved in the small bubbles of nitrogen gas.

The water and the many small bubbles are pumped from injector and into the ballast tank where the small bubbles rise to the surface, and the oxygen is released.

The problem associated with the prior art is that the nitrogen generator is coupled to the existing ballast pumping system, and that the system is consequently limited by the capacity and performance of the ballast pump and the tubing systems.

It is the object of the present invention to provide a more efficient treatment of the water in ballast tanks in that the system comprises: one or more ballast tanks, a circulation pump capable of circulating or recirculating, via a tubing, ballast water from and to the one or more ballast tanks; a recirculation system (20) supplements the conventional ballast pumping system (10) the ballast water is pumped, by means of the recirculation pump (22), from a ballast tank via return pipes (23) to return pipes (24) and back to the ballast tank (1) via a feeder pipe (25) and distribution pipes 26; a gas supply unit connected to the tubing to the effect that gas, such as atmospheric air and/or inert gas, such as nitrogen and carbon dioxide, can be supplied to the ballast water; and one or more nozzle heads that are functionally connected to the tubing and is/are arranged in one or more ballast tanks, said one or more nozzle heads comprising at least one nozzle for injection of the gas-containing water into the one or more ballast tanks; a device configured for removing and/or killing live organisms present in the ballast water.

It is a further advantage of this invention that the treatment time in the tank is longer and hence more effective, and that a system is also used which inhibits corrosion.

According to an embodiment of the invention, the device relates to a means for supplying heat to the ballast water.

According to an embodiment of the invention, the device comprises at least one heat exchanger.

According to an embodiment of the invention, the at least one heat exchanger cools the treated ballast water by exchanging heat on the circulation pipe to and from the means for supplying heat to the ballast water.

According to an embodiment of the invention, the device comprises at least two heat exchangers, therein the means for supplying heat is constituted by a heat exchanger.

According to an embodiment of the invention, the circulation pipe between the means for supplying heat to the ballast water and the heat exchanger for cooling the ballast water is functionally coupled to a dwell-time increaser.

According to an embodiment of the invention, the gas supply unit comprises a pump.

According to an embodiment of the invention, the gas supply unit comprises at least two units for supplying gas to the ballast water, such as a pump capable of oxygenating the ballast water and/or stirring the ballast water in a ballast tank and an inert-gas generator capable of deoxygenating the ballast water, respectively.

According to an embodiment of the invention one or more nozzle heads is/are arranged in a lower zone of the ballast tank in the part of the ballast tank where Inflow of ballast water takes place.

The present invention further relates to a method for treating baliast water in ballast tanks, wherein said method comprises the measures: that ballast water is pumped into the ballast tank by means of a ballast pump; that ballast water is circulated in a circulation system by means of a recirculation pump; that inert gas such as nitrogen and/or carbon dioxide is supplied to the ballast water in the recirculation system via a gas supply unit; that the gas-containing water is injected into a ballast tank via one or more nozzles; that the ballast water is circulated through a device which is connected functionally to the recirculation system in order to remove and/or kill live organisms.

An embodiment of the invention comprises the measure that the ballast water is circulated through a heat exchanger to absorb heat from previously heated ballast water, that heat is supplied to the ballast water from a heat source via a means for supplying heat; that the flow rate of the ballast water is reduced by a dwell-time increaser to the effect that the period during which the heat treatment of the ballast water takes place is increased; that the ballast water is cooled by travelling through a heat exchanger. An embodiment of the method according to the invention comprises the measures that the supply of inert gas is interrupted; that gas is pumped to the ballast water via the gas supply unit and/or the pump to the effect that the ballast water is oxidized before the ballast water is discharged into the aquatic environment at the destination.

An embodiment of the invention comprises the measures that the supply of inert gas is interrupted; that atmospheric air Is pumped to the ballast water, via the gas supply unit and/or the pump, to the effect that the ballast water is oxidized before the ballast water is discharged into the aquatic environment at the destination.

An embodiment of the invention comprises the measures that, by means of a ballast water pump, ballast water is pumped into the ballast tank; that ballast water is recirculated by means of a recirculation pump in a recirculation system; that atmospheric air is supplied to the ballast water in the recirculation system via the gas supply unit; that the gas-containing water is injected into a ballast tank via one or more nozzles; that the ballast water is circulated through a device which is connected functionally to the recirculation system in order to remove and/or kill live organisms.

According to an alternative embodiment of the invention, it comprises at least one nozzle configured for powered rotation about both a first and a second axis which is perpendicular or not perpendicular to the first axis to the effect that a three-dimensional mixer pattern is produced.

Hereby it is obtained that the jets can reach into larger areas of the tank area which yields a faster and more effective mixture of the injected gas and the ballast water.

According to a further embodiment of the invention, it comprises one or more nozzle heads that are arranged flush with the interior bracing/bulkhead of the ballast tank.

Thereby it is obtained that the jets are capable of reaching all areas of the ballast tank which yields a more efficient distribution of the deoxidized water, while simultaneously ensuring optical cleaning of the surfaces and bottom of the ballast tank.

According to an embodiment of the invention, it comprises two or more nozzle heads arranged in one or more rows, wherein the one or more row(s) extend(s) tranaversally to the predominant flow direction of the ballast water when it runs into and through the ballast tanks. Additionally, the arrangement takes place in the lower zone of the ballast tank.

Thereby it is obtained that a lead front of deoxidized water Is created, and that the lead front moves through the ballast tank, the water being treated continuously.

According to an embodiment of the invention, the nitrogen or carbon dioxide generator comprises tubings coupled to the tubing system of the ballast water after the ballast pumps, on the delivery side, whereby the generator is also capable of supplying nitrogen or carbon dioxide to the ballast water, round the nozzles.

According to an embodiment of the invention, it relates to a vessel, wherein one ballast tank comprises one or more nozzle heads to the effect that the treatment of ballast water takes place in one ballast tank.

According to an embodiment of the invention, two or more ballast tanks comprise one or more nozzle heads to the effect that the treatment of ballast water takes place concurrently in several ballast tanks.

This solution Is an easy one to establish in existing ships and offshore constructions.

According to an embodiment of the vessel comprising a system according to the invention, at least one ballast tank comprises several recirculation systems, wherein the return and feeder pipes of the recirculation systems are associated with nozzle heads, wherein the return and feeder pipes are arranged successively in the flow direction of the ballast tank.

The present invention further relates to a method comprising the measure that the nitrogen or carbon dioxide-containing water is injected into a ballast tank via a nozzle head with rotating nozzles.

The nozzle head with rotating nodules optimises the mixing process and distributes the injected water far better than the hitherto known methods.

An embodiment of the invention comprises the measure that the treated ballast water is conveyed from a first ballast tank to the remaining ballast tanks.

Hereby the efficiently cleaned ballast water is passed on, and thereby the treated ballast water is caused to reach to all corners of a ballast tank, and therefore it is avoided that remote areas of the ballast tank contain ballast water that is not treated.

A further embodiment of the method according to the invention comprises the measure that inert gas is supplied to the ballast tanks for periods of time or at intervals to uphold an oxygen-poor environment in the ballast tanks.

This is particularly advantageous when a ballast tank is emptied in order to uphold the oxygen-poor environment

In an embodiment of the method according to the invention, the method comprises the following successive steps: that the nitrogen- or carbon dioxide-containing water is sprayed into a ballast tank via a nozzle head with rotating nozzles; that the treated ballast water is conveyed from a first ballast tank to the remaining ballast tanks; that nitrogen and/or carbon dioxide can be supplied to the ballast tanks for periods of time or at intervals to uphold an oxygen-poor environment in the ballast tanks.

According to an embodiment, the method comprises that the nitrogen- or carbon dioxide-containing water is sprayed into several or all of the ballast tanks concurrently via nozzle heads with rotating nozzles.

This ensures an improved and faster treatment of the water.

An embodiment of the method according to the invention comprises the steps: that the ballast tanks are emptied to a level below the nozzle heads; that liquid is pumped In, through the nozzles, whereby the interior faces of the ballast tank are high-pressure water blasted. By the system also being capable of cleaning the ballast tanks, efficient sludge and sediment control is accomplished by use of a minimum of technical means.

The term "vessel" is to be construed as comprising ships, submarines, offshore structures and man-made constructions for use at sea.

The term "nozzle head" is to be construed such that one single or several nozzles can be arranged thereon, irrespective of whether or not the nozzles are rotating.

Other embodiments of the invention will appear from the dependent claims.

In the following, the invention will be described in further detail with reference to the figures/drawing showing an embodiment of the system according to the invention.

### List of figures

Figure 1 shows a ship with 12 ballast tanks having a conventional configuration of a pumping and tubing system for distributing ballast water in the ballast tanks;
Figure 2 shows a ship with a recirculation system according to the invention;
Figure 3 shows an L-shaped ballast tank, seen in a lateral view, corresponding to section A in figure 4;
Figure 4 shows a ballast tank seen from above, with two nozzle heads;
Figure 5 shows the lower end of a ballast tank near the inflow of ballast water, corresponding to a portion of section A from figure 4;
Figure 6 shows a ballast tank having several recirculation systems coupled to the same ballast tank;
Figure 7 shows an L-shaped ballast tank, a recirculation system and heat exchanger.

### Detailed description with preference to the figures

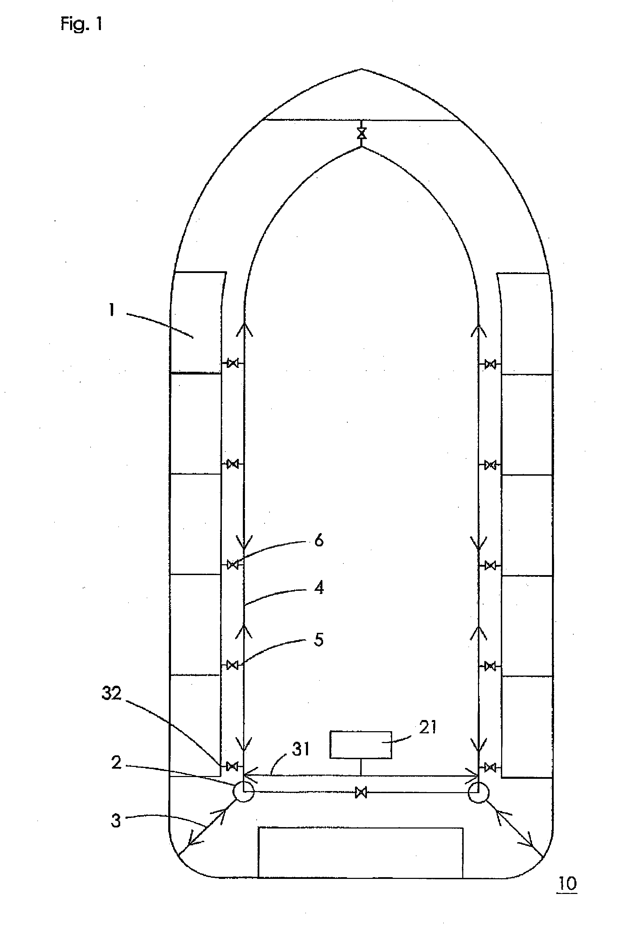

Figure 1 shows a system 10 built as a conventional tubing and pumping system for circulating ballast water to ballast tanks 1 onboard a ship. The ballast tanks 1 are typically arranged along the outer periphery of the ship, and each ballast tank 1 is provided with a distribution pipe 5 from the main feeder line 4 for the ballast water. The distribution pipes 5 are provided with a suitable number of valves 8.

The system 10 may serve both to supply and to discharge ballast water to and from the ballast tanks 1.

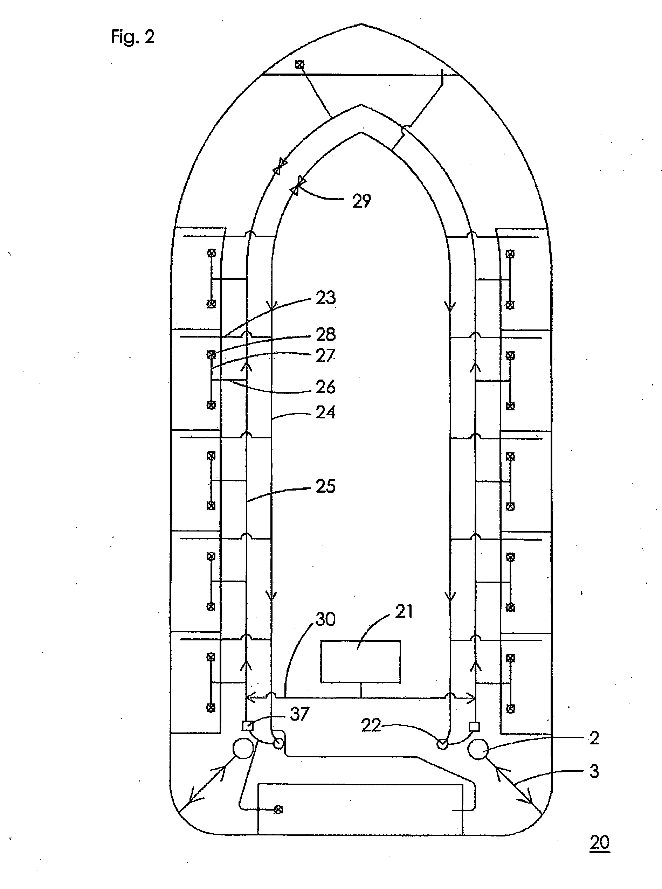

Figure 2 shows an embodiment of the invention, wherein a recirculation system 20 supplements the conventional ballast pumping system 10 shown in figure 1. The recirculation system 20 consists of recirculation pumps 22 and tubings to and from the ballast tanks 1 and a gas supply unit 21, such as a nitrogen generator.

The ballast water is pumped, by means of the recirculation pump 22, from a ballast tank 1 via return pipes 23 to return pipes 24 and back to the ballast tank 1 via the feeder pipe 25 and the distribution pipes 26.

It is an advantage by the treatment of the ballast water in the ballast tank rather than in the pipe feeder line of the ballast pump while the ballast water is on its way into the ballast tank that it is possible to remove the oxygen in the water to a far lower level. The treatment time is longer and hence more efficient.

Consequently, due to the conditions with lower oxygen content, the undesired micro-organisms are killed faster and more efficiently. Moreover, the recirculation system is an independent system that is not limited by the ballast pump and the associated tubing system.

Therefore the recirculation system may use a recirculation pump capable of running at a higher pressure than the ballast pump, whereby the solubility of the gas takes place more efficiently. Moreover, the bubble size of the gas will be smaller at a higher pressure which will further enhance the process, since the surface area and hence the treatment surface of the gas will be larger, and, also, the bubbles will stay afloat for a longer period of time in the ballast water.

The system also comprises a gas supply unit 21, such as a nitrogen generator, which is connected to a feeder pipe 25 on the delivery side, after the recirculation pump 22. The feeder pipe 25 conveys the recirculated, nitrogen-containing ballast water back into the ballast tanks 1. It takes place via a distribution pipe 26 conveying the water into each ballast tank. The distribution pipe 26 is, in the shown embodiment, further divided between two branch pipes 27 to which nozzle heads 28 are associated.

The nozzle heads 28 may comprise nozzles of the type fixed nozzles or nozzles configured for powered rotation about a first axis or nozzles configured for powered rotation about both a first and a second axis which is perpendicular or not perpendicular to the first axis to the effect that a two- or three-dimensional mixer pattern is formed, or a combination of nozzle heads with both one or more fixed nozzles and/or one or more rotating nozzles.

The nitrogen generator can be combined with or substituted by a carbon dioxide generator, and when, in the text above or below, reference is made to either nitrogen or carbon dioxide, it is not to be understood unequivocally since the one type of gas may replace the other. Also, the text refers to inert gas; that is not to be construed narrowly, as the phrase "inert gas" as used in this text means that the gas composition can be eg nitrogen, azote, or argon. It could also be some other gas or gas mixture in a ratio and concentration where bubbles from the gasses would be able to wash out so much oxygen from the ballast tanks that organisms present therein are killed.

The recirculation system 20 comprises a suitable number of valves 29.

In the ballast tanks 1, a flow direction is formed from the coupling of the distribution pipes 5 at the inlet 32 of ballast water into the ballast tank towards the opposite end of the ballast tank.

In figure 1. the flow direction from the inner side of the ship towards the outer periphery of the ship in the ballast tanks is situated aport, starboard and in the stem direction. The ballast tank in the stem end of the ship has a flow direction from the right towards the left.

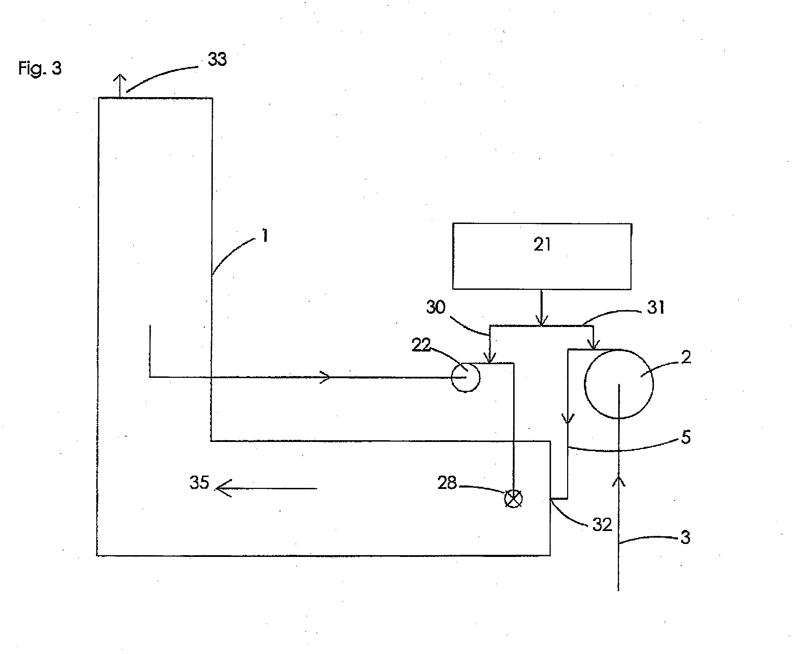

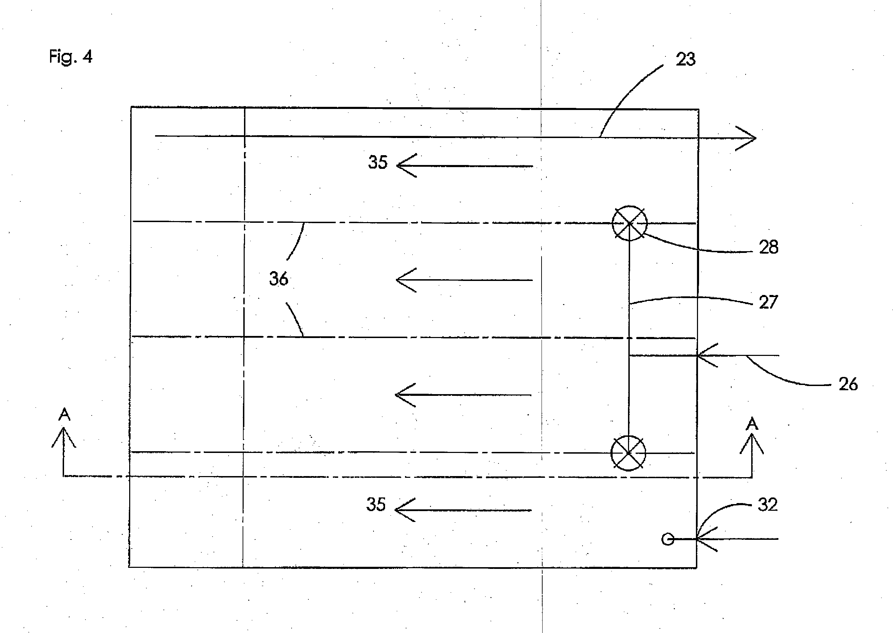

Figure 3 shows an L-shaped ballast tank, seen from the side, see section A in figure 4, with a nozzle head arranged in relative proximity of the inlet 32 to the ballast tank.

This means that the location of the nozzle head takes the flow direction in the tank into consideration in order to thereby obtain a more efficient treatment of the water.

Ballast tanks may be of varying configurations; eg the ballast tanks may be L-shaped, as shown in figure 3; they may also consist exclusively of a rectangularly configured tank which may be oriented either vertically or horizontally.

The number of nozzle heads 28 in a ballast tank 1 may vary in response to the configuration of the ballast tanks as well as to their size.
The gas-containing bubbles that are formed by the injection of the nitrogen gas via the nozzles will inherently seek upwards in a ballast tank. Irrespective of the configuration of a ballast tank, the nozzle heads should therefore optimally be arranged in the lower zone of the tank.

From figure 3 it will appear that the ballast tank 1 is provided with a valve 33 at the top of the tank, whereby excess gas, if any, may be discharged.

According to one embodiment, the valve 33 may ensure a pressure slightly above that of the atmosphere in the ballast tank by means of an ongoing supply of nitrogen to the water in the ballast tank. Thereby it is prevented that atmospheric air containing oxygen enters into the ballast tank.

According to an aspect of the invention, inert gas, nitrogen and/or carbon dioxide may be supplied to the ballast water in the water supply pipe between the ballast pump and the ballast tank, on the delivery side of the ballast pump, via the gas supply unit.

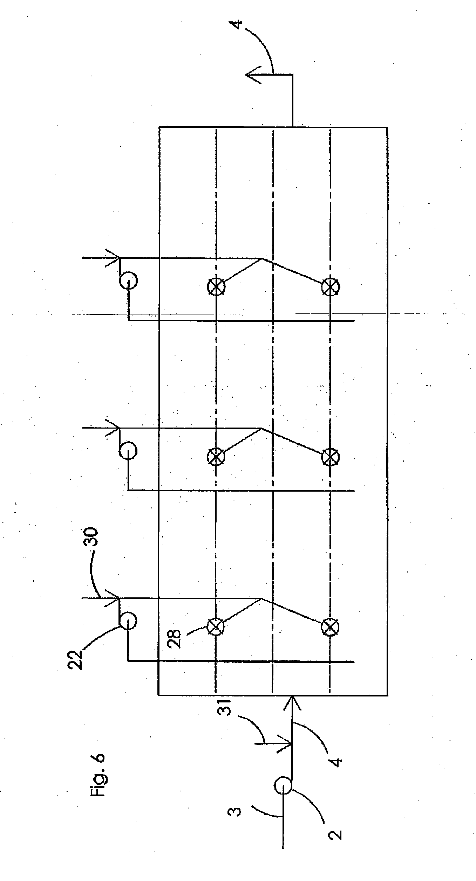

According to a further aspect of the invention, as illustrated in figure 6, wherein ballast water is treated while it passes through the ballast tank and is thus able to be passed on in treated form to other ballast tanks, it is an option to establish several rows of nozzle heads in a ballast tank, wherein each row is arranged traneverselly to the flow direction in the ballast tank, and wherein the rows are arranged successively after one another in the flow direction.

Thereby a lead front zone of treated ballast water is formed from one row to the next one, wherein zones of ballast water are treated onwards through the ballast tank in the ffow direction. The front zone which is designated by an arrow in figures 3 and 4 will thus be essentially at right angles to the flow direction in the ballast tank.

Such treatment is made even more efficient in having a number of minor recirculation systems coupled to the same ballast tank 1, see figure 6. For instance, each row of nozzle heads 28 may constitute a recirculation system, wherein each row of nozzle heads may treat the ballast water on a continuous basis through the ballast tank in the flow direction to the effect that the recirculated water is discharged between the rows of nozzle heads successively in the flow direction.

Thereby the surrounding ballast water for each row of nozzle heads 28 in the ballast tank will, in the flow direction, be subject to further treatment in the next row of nozzle heads 28.

Thus each single minor recirculation system will further treat the ballast water from the preceding recirculation system which will thereby enhance the deoxidization in the front zone 35 of the ballast water.

By the system shown in figure 8. the ballast water will contain an amount of oxygen of eg about 8 ppm before the ballast pump, and, after the supply of nitrogen, the value may have come down as far as to eg 2 ppm, and by the continuous treatment through rows of nozzles the content is decreased from 2 ppm to eg 0,8, 0.4, and finally to 0.1 ppm. Thus, the ballast water will have a value of 0.1 pmm when the ballast water is passed on to the next ballast tank.

In case ballast water is treated concurrently in two tanks, and that ballast water is pumped on to the remaining ballast tanks via the ballast pumps, it is possible, in that case, to supply further nitrogen during passage from the one ballast tank to the other.

Figure 4 shows a ballast tank 1 seen from above. In the ballast tank two nozzle heads 28 are provided. Nitrogen-containing ballast water is advanced via distribution pipes 26, to branch pipes 27, on to the nozzle heads 28 in the ballast tank. The two nozzle heads 28 are arranged in the first portion of the tank, near the inflow of ballast water to the ballast tank 1 to the effect that the treatment process takes place at the inlet 32, and a lead front zone 35 is formed in the flow direction.

In the treatment of the ballast water and in order to optionally uphold an oxygen-poor or oxygen-free environment in the ballast water, nitrogen is added to the ballast tanks for periods of time or at fixed intervals, if necessary. The supply of nitrogen may take place directly to the ballast water in the ballast tanks via tubing 31 between nitrogen generator 21 and the ballast tanks 1 or via the recirculation system 20.

The periodic supply of nitrogen to the water in the ballast tank may likewise ensure that atmospheric air containing oxygen does not penetrate into the ballast tank.

Likewise, according to an embodiment, a device 37 may be integrated into the recirculation system 20 which is to ensure a convenient treatment with ozone, UV irradiation or the like, to the effect that it is possible to tailor the kind of treatment to a given situation which may occur in the future.

Thus, the device 37 is a means for removing and/or killing live organisms. The organisms present in the ballast water are killed, eg by heat treatment, chemical means, or irradiation.

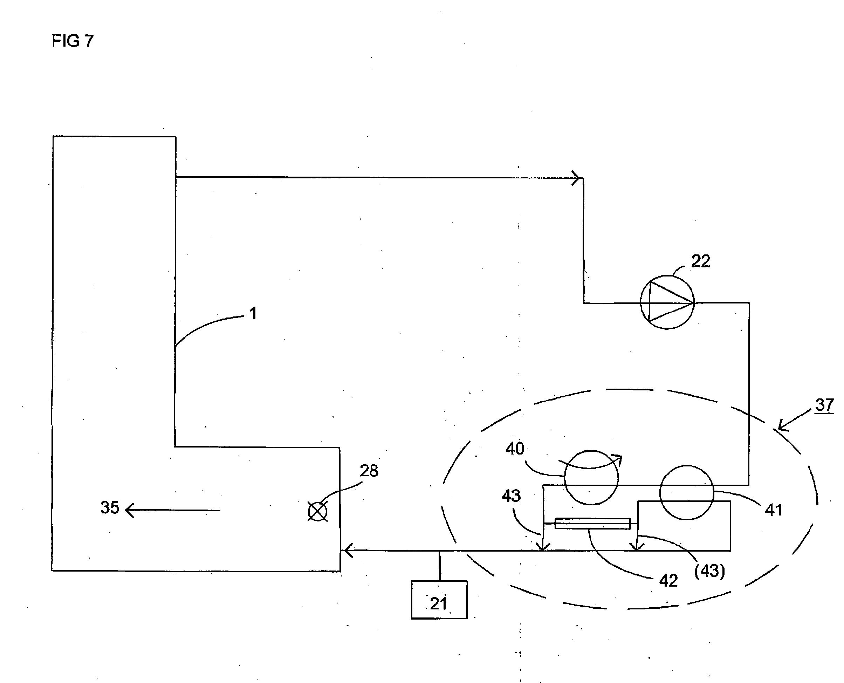

The integrated device may, in one embodiment, comprise a unit that further sterilises the water by means of heat. In the embodiment shown in figure 7, the device comprises a heat exchanger 41, such as eg a plate heat exchanger that exchanges heat between the water running into and out of, respectively, the device. In the following, such heat exchanger will be designated: the primary heat exchanger.

Thus, figure 7 shows two feeder lines passing through the primary heat exchanger.

The ballast water in the recirculation system 20 first passes through the heat exchanger (41) that cools the treated ballast water by exchanging heat on the circulation pipe to and from a means for supplying heat (40) to the ballast water. The means for supplying heat to the ballast water may be a heat exchanger or other kind of heat source. Typically that heat comes from the principal engine of the ship (not shown), but, of course, the heat may also be supplied from some other energy source.

The recirculation tube between the means for supplying heat (40) to the ballast water and the heat exchanger (41) for cooling the ballast water is coupled functionally to a dwell-time increaser (42).

When the ballast water has passed through the means for supplying heat (40), the ballast water runs through a section 42, before it leaves the device 37 via the primary heat exchanger 41.

The purpose of the section 42 is to increase the time during which the water has a high temperature, ie to increase the time elapsing from the water leaves the second heat exchanger 40 and until it runs into the primary heat exchanger. The section will thus be designated the dwell-time increaser in the following. The purpose of the dwell-time increaser is to increase the time during which sterilisation by means of heat takes place. The dwell-time increaser 42 may, in a simple embodiment, merely comprise tubes with an increased diameter, since the throughput rate in that tube will thereby be decreased. The dwell-time increaser may also be constituted by a tank/vessel of eg about 0.3 m³.

The capacity of 0.3 m³ was selected on the basis of an example wherein the flow through the heat exchangers is 125 m³/hour. That volume will bring about a dwell time of about 10 seconds, cf: 125 m³ /3600 s X 10 s = 0.3 m³.

in the shown example the water has, when it leaves the ballast tank, a temperature of about 20 °C. After having passed the circulation pump 22, the water is heated to a temperature of about 80° in the primary heat exchanger 41, following which it is heated further by about 5 degrees in the second heat exchanger 40 before it passes through the dwell-time increaser 42. Then the water leaves the device 37 via the primary heat exchanger. In the shown example, it takes place at a temperature of about 26 °C.

Obviously the dwell time may be varied by changing the flow and/or the throughput rate, and the about 10 seconds are not always the optimal time either, but experience has shown that a dwell time of about 10 seconds at 85 °C, like in the shown example, has a good sterilizing effect.

According to one embodiment the dwell-tlme increaser has a volume of 0.2 - 0,4 m³.

By including a heat exchanger as shown, the temperature of the water in the ballast tanks is also raised. The temperature on the outside of the ballast tanks (on the outside of the vessel) being thereby typically lower than that of the heated ballast water, the difference in temperature between the ballast water and the walls of the ballast tank will contribute to the formation of internal circulation patterns in the ballast tanks between the internal structures thereof. This increases the overall effect of the treatment of the ballast water.

In the exemplary embodiment explained above, comparatively narrow temperature intervals and time periods are employed. Of course, the invention is not restricted to said intervals or temperatures as they can be varied within the ordinary activities of the person skilled in the art.

The device 37 is, as described above, configured so as not to supply too hot ballast water to the ballast tanks. Thereby its overall energy requirements are reduced.

However, during wintertime it occurs that ships that are eg to be charged with oil in Russia are exposed to extremely cold conditions. This is due to the fact that the oil does not arrive via pipelines; rather they are carried to the ships by means of trucks or trains. Thereby the oil will typically have the same temperature as the air, which means that it will be as low as to below 40 °C. This circumstance gives rise to a problem, the ships being most often designed such that the steel thereof does not exhibit brittleness at temperatures as low as approximately -10 °C. Consequently, it Is often impossible to load eg oil which is very cold. By the invention it is realised that it is possible to design the device 37 such that it is also capable of heating the ballast water and hence to eliminate the drawbacks experienced in the context of the cold oil. This is provided by a bypass conduit 43 extending from a conduit point between the means for supplying heat to the ballast water and the heat exchanger 41 and to a conduit point between the heat exchanger 41 and the ballast tank. By completely or partially bypassing the heat exchanger 41 as described above, it is thus possible to regulate the temperature of the ballast water. In the context of a dwell-time increaser 42, it is possible, of course, to locate the bypass conduit 43 both before and/or after same.

Of course, this invention may function both dependently and independently of the other inventions described in this application, and consequently the invention may be subject to an independent application at a later point in time.

The gas supply unit 21 may comprise a generator and/or a pump. Thereby it is possible to supply gas to the recirculation system 20, such as atmospheric air. By supplying atmospheric air, it is possible to oxidize ballast eg before the ballast tanks are emptied of ballast water to the effect that the discharge protects the aquatic environment at the destination.

When gas-containing water is supplied to the ballast water in a ballast tank via a nozzle a lot of air bubbles of varying sizes, both micro-air bubbles and larger air bubbles, are generated. Those air bubbles move at different rates through the ballast tank and thus Jointly form a movement pattern in the ballast water to the effect that the ballast water is stirred efficiently.

Such stirring of the ballast water increases the effect of the treatment of the ballast water. Irrespective of whether the treatment takes place by deoxidization of the ballast water or via the device 37.

According to an embodiment of the invention, the treatment of the ballast water thus comprises the following measures that, by means of a ballast water pump, ballast water is pumped into the ballast tank; that ballast water is recirculated by means of a recirculation pump in a recirculation system: that atmospheric air is supplied to the ballast water in the recirculation system between the circulation pump and the ballast tank on the delivery side of the ballast pump, via the gas supply unit (21); that the gas-containing water is injected into a ballast tank via one or more nozzles; that the ballast water is circulated through a device (37) which is functionally connected to the recirculation system between the circulation pump and the ballast tank In order to remove and/or kill live organisms.

A device 37 as described above having two heat exchangers may function independently in a plant for treating ballast water and is not functionally dependent on the units and other inventions described in the present application. Albeit - as explained above - there may be a synergy between the use of the device and other ones of the described inventions, it is, however, an option to use it in parallel or in series with any one of the other sterilisation methods described and set forth in the present application.

Moreover, the device may operate independently of or in any combination with the remaining sterilisation methods described and set forth in this application, and those aspects may be subject to independent applications.

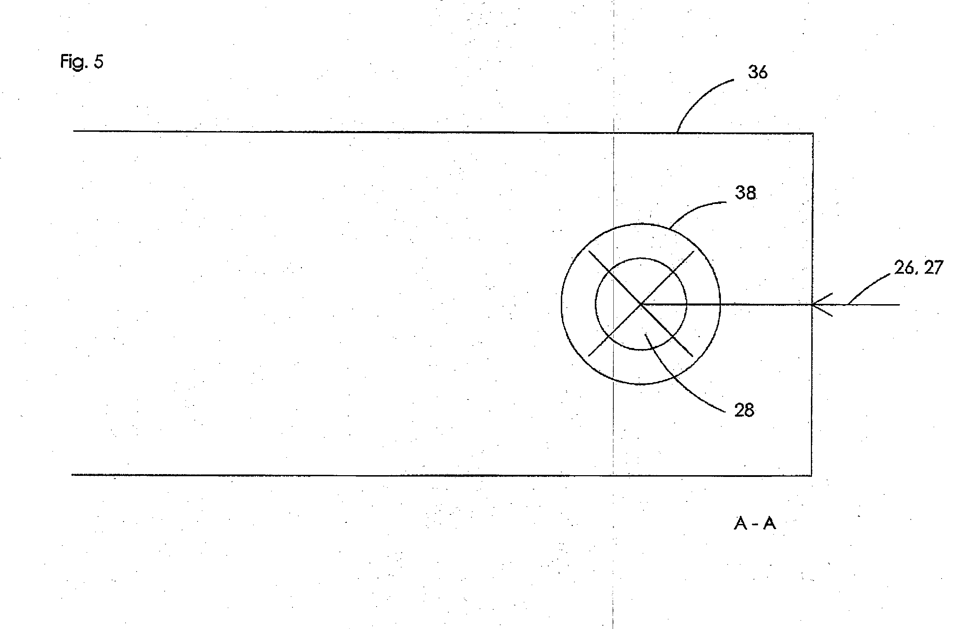

According to a convenient embodiment, the nozzle heads 28 may be arranged flush with the internal structures/bulkheads 36 of the ballast tank in openings 38 in the bulkheads 36 of the ballast tanks as will appear from figure 5. By that arrangement of the nozzle heads, the bulkheads of the ballast tanks will hinder as little as possible effective treatment of the ballast water, and the propagation of the gas-containing ballast water takes place most effectively to the effect that the least possible number of nozzle heads with rotating nozzles can be used.

## Claims

1. A system for treating ballast water in ballast tanks (1) onboard vessels and offshore constructions, said system (20) comprising:
- one or more ballast tanks (1),
- a circulation pump (22) capable of circulating or recirculating, via a tubing, ballast water from and to the one or more ballast tanks (1),
- a recirculation system (20) that supplements the conventional ballast pumping system (10) whereby the ballast water is pumped, by means of the recirculation pump (22), from a ballast tank via return pipes (23) to return pipes (24) and back to the ballast tank (1) via a feeder pipe (25) and distribution pipes 26;
- a gas supply unit (21) which is connected to the tubing (22) in such a manner that gas, such as atmospheric air and/or inert gas, such as nitrogen and/or carbon dioxide, can be supplied to the ballast water; and
- one or more nozzle heads (28) that are functionally connected to the tubing and is/are arranged in one or more ballast tanks (1), said one or more nozzle heads comprising at least one nozzle for injection of the gas-containing water into the one or more ballast tanks (1);
- **characterised in**
- a device (37) configured for removing and/or killing live organisms in the ballast water.

2. A system according to claim 1, **characterised in that** the device (37) comprises a means for supplying heat (40) to the ballast water.

3. A system according to one or more of the preceding claims, **characterised In that** the device (37) comprises at least one heat exchanger.

4. A system according to one or more of the preceding claims, **characterised in that** the at least one heat exchanger (41) cools the treated ballast water by exchanging heat on the circulation pipe to and from the means for supplying heat (40) to the ballast water.

5. A system according to one or more of the preceding claims, **characterised In that** the device (37) comprises at least two heat exchangers, wherein the device for supplying heat (40) is constituted by a heat exchanger.

6. A system according to one or more of the preceding claims, **characterised in that** the recirculation pipe between the device for supplying heat (40) to the ballast water and the heat exchanger (41) for cooling the ballast water Is functionally connected to a dwell-time increaser (42).

7. A system according to one or more of the preceding claims, **characterised in that** the bas supply unit (21) comprises a pump.

8. A system according to one or more of the preceding claims, **characterised in that** the gas supply unit (21) comprises at least two units for supplying gas to the ballast water, such as a pump/compressor capable of supplying air and hence oxygenating the ballast water and/or an inert-gas generator capable of supplying inert gas and thereby deoxygenating the ballast water while simultaneously stirring the ballast water in a ballast tank.

9. A system according to one or more of the preceding claims, **characterised in that** one or more nozzle heads (28) is/are arranged in a lower zone of the ballast tank (1) in the part of the ballast tank where inflow (32) of ballast water takes place.

10. A system according to claim 1, **characterised In that** the at least one nozzle is a not movable nozzle.

11. A system according to claim 1, **characterised In that** the at least one nozzle is configured for powered rotation about one or two axes.

12. A system according to claims 1, 10 and 11, **characterised in that** the system comprises at least two nozzle heads, of which one nozzle is a non-movable nozzle and one nozzle is configured for powered rotation about one or two axes.

13. A method for treating ballast water in ballast tanks, wherein the method comprises the steps of:
- pumping ballast water into the ballast tank (1) by means of a ballast pump;
- recirculating ballast water in a recirculation system by means of a recirculation pump;
- supplying inert gas such as nitrogen and/or carbon dioxide to the ballast water in the recirculation system via a gas supply unit (21);
- injecting the gas-containing water into a ballast tank via one or more nozzles;
- circulating ballast water through a device (37) which is functionally connected to the recirculation system in order to remove and/or kill live organisms.

14. A method for treating ballast water in ballast tanks according to claim 13, wherein the circulation of the ballast water through the device (37) comprises the following steps:
- circulating the ballast water through a heat exchanger (41) in order to absorb heat from previously heated ballast water;
- supplying heat to the ballast water from a heat source via a device for supplying heat (40);
- reducing the flow rate of the ballast water by a dwell-time increaser (42) to the effect that the time for heat-treating the ballast water is increased;
- cooling the ballast water by it being caused to travel through the heat exchanger (41).

15. A method according to claims 13 - 14, wherein the method further comprises the following steps:
- interrupting the supply of Inert gas;
- pumping gas to the ballast water via the gas supply unit (21) and/or the pump to the effect that the ballast water is oxidized before ballast water is discharged to the aquatic environment at the destination.

16. A method according to claims 13 - 14, wherein the method further comprises the following steps:
- interrupting the supply of Inert gas;
- pumping atmospheric air to the ballast water via the gas supply unit (21) and/or the pump to the effect that the ballast water is oxidized before the ballast water is discharged to the aquatic environment at the destination.

17. A method for treating ballast water in ballast tanks, wherein the method comprises the following steps:
- pumping, by means of a ballast water pump, ballast water into the ballast tank (1);
- recirculating, by means of a recirculation pump, ballast water Into a recirculation system;
- supplying atmospheric air to the ballast water in the recirculation system via the gas supply unit (21);
- injecting the gas-containing water into a ballast tank via one or more nozzles;
- circulating the ballast water through a device (37) which is functionally connected to the recirculation system to remove and/or kill live organisms.

## Patentansprüche

1. System zur Behandlung von Ballastwasser in Ballasttanks (1) an Bord von Fahrzeugen und Offshore-Konstruktionen, wobei das System (20) umfasst:
- einen oder mehrere Ballasttanks (1),
- eine Zirkulationspumpe (22), die über eine Verrohrung Ballastwasser von und zu dem einen oder den mehreren Ballasttank(s) (1) zirkulieren oder rezirkulieren kann;
- ein Rezirkulationssystem (20), welches das herkömmliche Ballastpumpensystem (10) ergänzt, wobei das Ballastwasser mittels der Rezirkulationspumpe (22) über Rücklaufleitungen (23) von einem Ballasttank zu Rücklaufleitungen (24) und über eine Speiseleitung (25) und Verteilerleitungen (26) zurück zum Ballasttank (1) gepumpt wird;
- eine Gasversorgungseinheit (21), die mit der Verrohrung (22) derart verbunden ist, dass Gas, wie beispielsweise atmosphärische Luft und/oder Inertgas, wie beispielsweise Stickstoff und/oder Kohlendioxid, zum Ballastwasser zugeführt werden kann; und
- einen Düsenkopf bzw. mehrere Düsenköpfe (28), der bzw. die mit der Verrohrung funktionell verbunden ist bzw. sind und in einem oder mehreren Ballasttank(s) (1) angebracht ist bzw. sind, wobei der eine Düsenkopf bzw. die mehreren Düsenköpfe mindestens eine Düse zum Injizieren des gashaltigen Wassers in den einen oder in die mehreren Ballasttank(s) (1) umfasst bzw. umfassen;
**gekennzeichnet durch**
- eine Vorrichtung (37), die für das Entfernen und/oder das Töten von lebenden Organismen in dem Ballastwasser ausgebildet ist.

2. System nach Anspruch 1, **dadurch gekennzeichnet, dass** die Vorrichtung (37) Mittel für das Zuführen von Wärme (40) zum Ballastwasser aufweist.

3. System nach einem oder mehreren der vorgehenden Ansprüche, **dadurch gekennzeichnet, dass** die Vorrichtung (37) zumindest einen Wärmetauscher aufweist.

4. System nach einem oder mehreren der vorgehenden Ansprüche, **dadurch gekennzeichnet, dass** der zumindest eine Wärmetauscher (41) das behandelte Ballastwasser durch Tauschen von Wärme an der Zirkulationsleitung in die bzw. aus den Mittel(n) für das Zuführen von Wärme (40) zum Ballastwasser kühlt.

5. System nach einem oder mehreren der vorgehenden Ansprüche, **dadurch gekennzeichnet, dass** die Vorrichtung (37) zumindest zwei Wärmetauscher aufweist, wobei die Vorrichtung für das Zuführen von Wärme (40) durch einen Wärmetauscher gebildet ist.

6. System nach einem oder mehreren der vorgehenden Ansprüche, **dadurch gekennzeichnet, dass** die zwischen der Vorrichtung für das Zuführen von Wärme (40) zum Ballastwasser und dem Wärmetauscher (41) zum Kühlen des Ballastwassers befindliche Rezirkulationsleitung mit einer Anordnung zum Erhöhen der Verweilzeit (42) verbunden ist.

7. System nach einem oder mehreren der vorgehenden Ansprüche, **dadurch gekennzeichnet, dass** die Gasversorgungseinheit (21) eine Pumpe aufweist.

8. System nach einem oder mehreren der vorgehenden Ansprüche, **dadurch gekennzeichnet, dass** die Gasversorgungseinheit (21) zumindest zwei Einheiten für das Zuführen von Gas zum Ballastwasser umfasst, wie beispielsweise eine Pumpe/einen Kompressor, welche(r) Luft abgeben und somit das Ballastwasser oxygenieren kann, und/oder einen Inertgasgenerator, welcher Inertgas abgeben und somit das Ballastwasser deoxygenieren kann, während das Ballastwasser in einem Ballasttank gleichzeitig gerührt wird.

9. System nach einem oder mehreren der vorgehenden Ansprüche, **dadurch gekennzeichnet, dass** ein Düsenkopf bzw. mehrere Düsenköpfe (28) in einem unteren Bereich des Ballasttanks (1) in dem Teil des Ballasttanks, wo die Einströmung (32) von Ballastwasser stattfindet, angeordnet ist bzw. sind.

10. System nach Anspruch 1, **dadurch gekennzeichnet, dass** die zumindest eine Düse eine nichtbewegliche Düse ist.

11. System nach Anspruch 1, **dadurch gekennzeichnet, dass** die zumindest eine Düse für eine angetriebene Drehung um eine oder zwei Achsen ausgebildet ist.

12. System nach Anspruch 1, 10 und 11, **dadurch gekennzeichnet, dass** das System zumindest zwei Düsenköpfe umfasst, von denen eine Düse eine nichtbewegliche Düse ist, und eine Düse für eine angetriebene Drehung um eine oder zwei Achsen ausgebildet ist.

13. Verfahren zur Behandlung von Ballastwasser in Ballasttanks, wobei das Verfahren die folgenden Schritte umfasst:
- Pumpen von Ballastwasser in den Ballasttank (1) mittels einer Ballastpumpe;
- Rezirkulieren von Ballastwasser in einem Rezirkulationssystem mittels einer Rezirkulationspumpe;
- Zuführen von Inertgas, wie beispielsweise Stickstoff und/oder Kohlendioxid, zum Ballastwasser in dem Rezirkulationssystem über eine Gasversorgungseinheit (21);
- Injizieren des gashaltigen Wassers in einen Ballasttank über eine bzw. mehrere Düse(n);
- Zirkulieren von Ballastwasser durch eine Vorrichtung (37), welche mit dem Rezirkulationssystem funktionell verbunden ist, um lebende Organismen zu entfernen und/oder zu töten.

14. Verfahren zur Behandlung von Ballastwasser in Ballasttanks nach Anspruch 13, wobei das Zirkulieren des Ballastwassers durch die Vorrichtung (37) die folgenden Schritte umfasst:
- Zirkulieren des Ballastwassers durch einen Wärmetauscher (41), um Wärme aus zuvor erwärmtem Ballastwasser zu absorbieren;
- Zuführen von Wärme zum Ballastwasser aus einer Wärmequelle durch eine Vorrichtung zur Versorgung von Wärme (40);
- Reduzieren der Strömungsgeschwindigkeit des Ballastwassers durch eine Anordnung zum Erhöhen der Verweilzeit (42) zu einem solchen Maße, dass die Zeit für die Wärmebehandlung des Ballastwassers erhöht wird;
- Kühlen des Ballastwassers dadurch, dass es dazu bewegt wird, durch den Wärmetauscher (41) zu strömen.

15. Verfahren nach Anspruch 13-14, wobei das Verfahren ferner die folgenden Schritte umfasst:
- Unterbrechung der Versorgung von Inertgas;
- Pumpen von Gas in das Ballastwasser über die Gasversorgungseinheit (21) und/oder die Pumpe zu einem solchen Maße, dass das Ballastwasser oxidiert wird, bevor das Ballastwasser in die aquatische Umwelt am Bestimmungsort ausgetragen wird.

16. Verfahren nach Anspruch 13-14, wobei das Verfahren ferner die folgenden Schritte umfasst:
- Unterbrechung der Versorgung von Inertgas;
- Pumpen von atmosphärischer Luft in das Ballastwasser über die Gasversorgungseinheit (21) und/oder die Pumpe zu einem solchen Maße, dass das Ballastwasser oxidiert wird, bevor das Ballastwasser in die aquatische Umwelt am Bestimmungsort ausgetragen wird.

17. Verfahren zur Behandlung von Ballastwasser in Ballasttanks, wobei das Verfahren die folgenden Schritte umfasst:
- Pumpen von Ballastwasser in den Ballasttank (1) mittels einer Ballastwasserpumpe;
- Rezirkulieren von Ballastwasser in ein Rezirkulationssystem mittels einer Rezirkulationspumpe;
- Zuführen von atmosphärischer Luft zum Ballastwasser in dem Rezirkulationssystem über die Gasversorgungseinheit (21);
- Injizieren des gashaltigen Wassers in einen Ballasttank über eine bzw. mehrere Düse(n);
- Zirkulieren des Ballastwassers durch eine Vorrichtung (37), welche mit dem Rezirkulationssystem funktionell verbunden ist, um lebende Organismen zu entfernen und/oder zu töten.

## Revendications

1. Système de traitement d'eau de ballast dans des réservoirs de ballast (1) à bord de navires et de constructions en mer, ledit système (20) comprenant:
- un ou plusieurs réservoirs de ballast (1),
- une pompe de circulation (22) capable de la circulation ou de la recirculation, par l'intermédiaire d'une tubulure, d'eau de ballast à partir de et vers l'un ou plusieurs réservoirs de ballast (1);
- un système de recirculation (20) qui complète le système conventionnel à pompage de ballast (10), l'eau de ballast étant pompée, au moyen de la pompe de recirculation (22), à partir d'un réservoir de ballast (23) par l'intermédiaire des conduites de retour (24) et de retour au réservoir de ballast (1) par l'intermédiaire d'une conduite d'alimentation (25) et des conduites de distribution (26);
- une unité d'alimentation en gaz (21) qui est reliée à la tubulure (22) d'une telle manière que le gaz, tel que l'air atmosphérique et/ou le gaz inerte, tel que l'azote et/ou le dioxyde de carbone peuvent être fournis à l'eau de ballast; et
- une ou plusieurs têtes de buse (28) qui sont reliées fonctionnellement à la tubulure et sont disposées dans un ou plusieurs réservoirs de ballast (1), lesdites une ou plusieurs têtes de buses comprenant au moins une buse pour l'injection de l'eau contenant du gaz dans l'un ou plusieurs réservoirs de ballast (1);
**caractérisé en ce que**
- un dispositif (37) configuré pour enlever et/ou tuer des organismes vivants dans l'eau de ballast.

2. Système selon la revendication 1, **caractérisé en ce que** le dispositif (37) comprend un moyen pour fournir de la chaleur (40) à l'eau de ballast.

3. Système selon l'une ou plusieurs des revendications précédentes, **caractérisé en ce que** le dispositif (37) comprend au moins un échangeur de chaleur.

4. Système selon l'une ou plusieurs des revendications précédentes, **caractérisé en ce que** l'au moins un échangeur de chaleur (41) refroidit l'eau de ballast traitée par l'échange de chaleur sur la conduite de circulation vers et à partir du moyen pour fournir de la chaleur (40) à l'eau de ballast.

5. Système selon l'une ou plusieurs des revendications précédentes, **caractérisé en ce que** le dispositif (37) comprend au moins deux échangeurs de chaleur, dans lequel le dispositif pour fournir de la chaleur (40) est constitué par un échangeur de chaleur.

6. Système selon l'une ou plusieurs des revendications précédentes, **caractérisé en ce que** la conduite de recirculation entre le dispositif pour fournir de la chaleur (40) à l'eau de ballast et l'échangeur de chaleur (41) pour refroidir l'eau de ballast traitée est reliée fonctionnellement à un dispositif d'agrandissement du temps de séjour (42).

7. Système selon l'une ou plusieurs des revendications précédentes, **caractérisé en ce que** l'unité d'alimentation en gaz (21) comprend une pompe.

8. Système selon l'une ou plusieurs des revendications précédentes, **caractérisé en ce que** l'unité d'alimentation en gaz (21) comprend au moins deux unités pour fournir du gaz à l'eau de ballast, telle qu'une pompe/un compresseur capable de fournir de l'air et ainsi d'oxygéner l'eau de ballast et/ou un générateur de gaz inerte capable de fournir du gaz inerte et ainsi désoxygéner l'eau de ballast et en même temps d'agiter l'eau de ballast dans un réservoir de ballast.

9. Système selon l'une ou plusieurs des revendications précédentes, **caractérisé en ce qu'**une ou plusieurs têtes de buse (28) sont disposées dans une zone inférieure du réservoir de ballast (1) dans la partie du réservoir de ballast où l'entrée (32) de l'eau de ballast a lieu.

10. Système selon la revendication 1, **caractérisé en ce que** l'au moins une buse est une buse immobile.

11. Système selon la revendication 1, **caractérisé en ce que** l'au moins une buse est configurée pour la rotation propulsée autour d'un axe ou de plusieurs axes.

12. Système selon les revendications 1, 10 et 11 **caractérisé en ce que** le système comprend au moins deux têtes de buse, dont l'une buse est une buse immobile et l'une buse est configurée pour la rotation propulsée autour d'un axe ou de plusieurs axes.

13. Procédé de traitement d'eau de ballast dans des réservoirs de ballast, ledit procédé comprenant les étapes consistant à:
- pomper de l'eau de ballast dans le réservoir de ballast (1) au moyen d'une pompe de ballast;
- recirculer de l'eau de ballast dans un système de recirculation au moyen d'une pompe de recirculation;
- fournir du gaz inerte tel que de l'azote et/ou du dioxyde de carbone à l'eau de ballast dans le système de recirculation par l'intermédiaire d'une unité d'alimentation en gaz (21);
- injecter l'eau contenant du gaz dans un réservoir de ballast par l'intermédiaire d'une ou de plusieurs buses;
- circuler de l'eau de ballast par un dispositif (37) qui est relié fonctionnellement au système de recirculation afin d'enlever et/ou tuer des organismes vivants.

14. Procédé de traitement d'eau de ballast dans les réservoirs de ballast selon la revendication 13, dans lequel la circulation de l'eau de ballast par le dispositif (37) comprend les étapes consistant à:
- circuler l'eau de ballast par un échangeur de chaleur (41) afin d'absorber la chaleur de l'eau de ballast chauffée précédemment;
- fournir de la chaleur à l'eau de ballast venant d'une source de chaleur par un dispositif pour fournir de la chaleur (40);
- réduire le taux d'écoulement de l'eau de ballast par un dispositif d'agrandissement du temps de séjour (42) ayant pour effet que le temps du traitement thermique de l'eau de ballast est augmenté;
- refroidir l'eau de ballast en la forçant de passer par l'échangeur de chaleur (41).

15. Procédé selon les revendications 13 à 14, dans lequel le procédé comprend en outre les étapes consistant à:
- interrompre l'alimentation en gaz inerte;
- pomper du gaz à l'eau de ballast par l'intermédiaire de l'unité d'alimentation en gaz (21) et/ou de la pompe ayant pour effet que l'eau de ballast est oxydée avant le déchargement de l'eau de ballast aux environnements aquatiques à la destination.

16. Procédé selon les revendications 13 à 14, dans lequel le procédé comprend en outre les étapes consistant à:
- interrompre l'alimentation en gaz inerte;
- pomper de l'air atmosphérique à l'eau de ballast par l'intermédiaire de l'unité d'alimentation en gaz (21) et/ou de la pompe ayant pour effet que l'eau de ballast est oxydée avant le déchargement de l'eau de ballast aux environnements aquatiques à la destination.

17. Procédé de traitement d'eau de ballast dans des réservoirs de ballast, ledit procédé comprenant les étapes consistant à:
- pomper de l'eau de ballast dans le réservoir de ballast (1) au moyen d'une pompe de ballast;
- recirculer de l'eau de ballast dans un système de recirculation au moyen d'une pompe de recirculation;
- fournir de l'air atmosphérique à l'eau de ballast dans le système de recirculation par l'intermédiaire de l'unité d'alimentation en gaz (21);
- injecter l'eau contenant du gaz dans un réservoir de ballast par l'intermédiaire d'une ou de plusieurs buses;
- circuler de l'eau de ballast par un dispositif (37) qui est relié fonctionnellement au système de recirculation afin d'enlever et/ou tuer des organismes vivants.
